# EUROPEAN PATENT APPLICATION

(11) **EP 1 382 377 A1**
(43) Date of publication of application: **21.01.2004**
(21) Application number: 02015778.0
(22) Date of filing: 15.07.2002
(51) Int. Cl.: B01D 65/04, B01D 61/18, B01D 61/14, C12H 1/06

(54) **Joint filtering and filter cleaning**

(71) Applicant: TUCHENHAGEN GmbH, 21514 Büchen (DE)
(72) Inventor: Raspe, Onno J.A., 7152 KH Eibergen (NL)
(74) Representative: Kahlhöfer, Hermann, Dipl.-Phys.

(57) **Abstract**

The invention concerns a method for micro filtering a liquid (2) with cross flow filtration using a filter (1) having an inlet (3), a permeate outlet (4), a circulation outlet (5) and a micro filtration membrane (6) comprising the following steps: Delivering liquid (2) in a circulation loop (7) from the circulation outlet (5) to the inlet (3); adding cleaning particles (8) into the liquid (2) and circulating the liquid (2) containing the cleaning particles (8) through the filter (1) in the circulation loop (7), thereby causing the cleaning particles (8) to clean the micro filtration membrane (6) mechanically. A corresponding device for micro filtration suitable for using the method according to the invention is given. The invention is distinguished in that micro filtration membranes are cleaned with help of cleaning particles so that cleaning intervals of the system can be extended. Due to the reduction of clogging of the membrane the filtering efficiency is increased considerably

## Description

The invention concerns a method and a device for micro-filtering a liquid with cross flow filtration using a micro-filtration membrane.

The EP 0 879 635 discloses a method for filtering fermented fluids that contain floating particles such as yeast cells or bacteria in high quantities. By using lithographically edged filter membranes made from a waver of a semi conductor such as silicon or silicon nitrate, many of the problems are overcome that are usually encountered in connection with other filtering methods such as usage of kieselguhr beds. Such filter membranes, that have openings with a comparatively great diameter but a small depth, have a comparatively small fluid resistance, so that high flow rates are achieved. Using such membranes the necessary space of filter installation can be reduced remarkably. Due to the lithographical techniques, the size and the shape of the openings can be optimised to the specific needs involved in the specific filtering process. As an example micro sieves that are used for micro filtration have pores with at least practically equal size of a maximum of about two micrometer, preferably smaller than 1 micrometer.

Such micro sieves can be used for so called cross flow filtration, where a main flow of the liquid for filtering is guided along the filter instead of through it and, due to a pressure difference applied over both sides of the filter, a part of the liquid flow path will nevertheless penetrate through the filter and can be drained as clean permeate. The remaining part of the liquid for filtering will again be mixed with a liquid still to be filtered and is guided repeatedly over the filter so that a small part of the original amount of liquid is therefore eventually left over having a high concentration of contaminants.

It is important that both the micro sieve and the support do not interact with the liquid to be filtered. For food application they must not be harmful or release harmful components to the consumer of the food. It is also important that the micro sieve and the support can be cleaned easily and they can be used for certain time periods to be installed in technical machines.

For cleaning the delicate micro sieves it has been proposed to apply a back pulse of the permeate to lift the particles sticking on the entrance side to the sieve so that the particles can be taken away by the main flow of the liquid being guided along the filter. Such back pulsing or back flushing is a very efficient way to reduce the necessary cleaning cycles allowing prolonged operation of the system and increasing efficiency respectively the throughput. However, even though the back pulsing is very advantageous, it is not enough and once in a while a cleaning of the filter membrane becomes necessary as not all particles can be removed by back pulsing.

It is therefore an object of the invention to provide a method and a system that reduces the clogging of the filter membrane and that reduces the deterioration of the filter membrane due to the fouling by particles.

In order to achieve this object, according to the invention, a method for micro filtering a liquid with features as given in claim 1 and a device for micro filtration with features as given in claim 12 are provided. Further advantageous embodiments that can be applied individually or can be combined with one another arbitrarily are given in the respective depending claims.

The method for micro filtering a liquid according to the invention with cross flow filtration using a filter having an inlet, a permeate outlet, a circulation outlet and a micro filtration membrane comprises the following steps: Delivering the liquid in a circulation loop from the circulation outlet to the inlet; adding cleaning particles into the liquid and circulating the liquid containing the cleaning particles through the filter in the circulation loop thereby causing the cleaning particles to clean the micro filtration membrane mechanically.

The method can be applied to liquids containing suspended particles. The particles have mechanical sizes ranging from 0.0001 mm to 1 mm and may be of biological origin. Suspended particles may be bacteria, cells or cell fractions. The liquid may be a fermented liquid such as beer or wine. The liquid may be water. The method may be applied for medical purposes such as blood cleaning or preparation of vaccines. The micro filtration membrane comprises a multiplicity of pores preferably having a diameter less than 10 micrometer, in particular less than 5 micrometer, preferably less than 2 micrometer. The size of the depth of the openings should be no more than the diameter, in particular no more than half of the diameter. The thickness of the sieve preferably ranges in between 0.5 and 1.5 micrometer. By adding the cleaning particles into the liquid and circulating the liquid together with the cleaning particles along the micro filtration membrane, the micro filtration membrane is mechanically cleaned by the cleaning particles. The mechanical cleaning effect depends on a multiplicity of parameters such as the particle size, the flow rate, the velocity of the particles relative to the membrane, and the effective density of the particles (the effective density of a particle is its weight divided by its overall volume). The mechanical surface structure of the particles also influences how the fouling on the membrane is removed. The cleaning particles may remove the fouling by abrasion or by binding the suspended particles. The velocity as well as the flow rate may be specified in the circulation loop and may be changed during the course of the filtering depending on the level of cleaning to be reached.

In an embodiment of the invention the cleaning particles are removed together with any slurry materials retained by the filter. This embodiment may by applied when the cleaning particles are chosen to be of essentially same size like the slurry materials. The cleaning particles may have sizes from 0.001 mm up to 0.5 mm.

It is advantageous when the slurry materials retained by the filter are depleted from the circulation loop while keeping the cleaning particles in the circulation. In this case the cleaning particles can be used reiteratively for a long time and do not need to be replaced. The selective depletion of the slurry materials retained by the filter from the circulation loop may be performed by a grid with openings being permeable for slurry materials yet being impermeable for the cleaning particles. The grid separates any slurry materials from the cleaning particles. For this purpose it is advantageous when the size of the openings range between 0,02 mm and 0,6 mm, in particular between 0,03 mm and 0,3 mm, preferably between 0,04 mm and 0,2 mm.

The cleaning particles may have an effective density being equal to the density of the liquid. In case of beer of wine or blood the effective density of the cleaning particles should be in the range between 0.9 g/cm³ and 1,44 g/cm³. With such comparatively light weight cleaning particles it is assured that the fragile micro filtration membrane is not affected negatively by mechanical impacts. Especially the usage of cleaning particles made of polymers or plastics is favourable as these materials are very soft and do not effect scratches on the micro filtration membrane.

For more rigid membranes the effective density of the material of the cleaning particles may be more than 1.4 g/cm³ such as glass, ceramics and/or steel. Silica-hydro-gel or silica-xero-gel may be also applied. The shape of the cleaning particles may be balls or ellipsoids.

Good cleaning performance is achieved with cleaning particles having a mean particle size ranging from 0,01 mm to 1 mm, in particular from 0,015 mm to 0,5 mm, preferably from 0,02 mm to 0,2 mm. With such particle sizes the strain exerted on the filter membrane is high enough to remove the fouling yet low enough to avoid breakage of the filter membrane. Common velocities of the cleaning particles within the circulation loop in the region of the filter membrane may range between 0.2 and 20 m/sec, in particular between 0.4 and 10 m/sec, preferably between 0.5 and 4 m/sec.

In an advantageous embodiment of the invention, stabilizers are added into the liquid in the circulation loop, thereby binding tanning agents, such as poly-phenol complexes, and/or proteins to the stabilizer. With the stabilizer, substances that are too small to be filtered out mechanically directly are bound to the stabilizer. Once they are bound they can be filtered out together with the stabilizer. Stabilizer substances may be for instance polyvinylpolypyrrolidone (PVPP) and silica gel. Advantageously the stabilizer reacts with protein haze precursor substances. In case of beer brewery is advantageous to cool the beer during stabilisation, in particular to temperatures in the range of -5°C and +5°C. A coarse filtering may be performed to remove at least part of the precipitated material. The stabilizer may also be tannin, tannin acid, tannin salt or tannin-like material, or may be phenol or polyphenol.

For further supporting the cleaning of the membrane with the cleaning particles a back pulse of permeate is generated. With the back pulse the flow of permeate through the micro filtration membrane is reversed and particles sticking to or in the pores of the membrane are removed. The combination of mechanical cleaning of the micro filtration membrane with cleaning particles together with the back pulse allows a prolonged operation of the filter system reducing costs for operating the system.

According to the invention the device for micro filtration of liquid with cross flow filtration comprises a delivering means and a filter having an inlet, a permeate outlet, a circulation outlet and a micro filtration membrane, wherein the inlet and the circulation outlet are in fluid conductive connection with the delivering means to form a circulation loop and is characterized in that the circulation loop comprises a feed for adding cleaning particles for mechanically cleaning the membrane.

With the feed, cleaning particles are added into the circulation loop, so that they follow the flowing liquid along the membrane and the micro filtration membrane can be cleaned mechanically. The liquid with the circulation loop is kept in constant circulation with help of the delivering means, wherein a circulation loop is formed by the circulation outlet, the delivering means and the inlet. The liquid passes along the micro filtration membrane. The liquid may contain micro biological particles. It may be fermented liquid, in particular beer or wine. It may also be blood or serum or other liquids involved in medicine or biochemistry.

A specific embodiment of the invention, a common drain is provided for joint removal of the cleaning particles together with any slurry materials retained by the filter. The removal may be batch-wise or continuous. It is advantageous to add as many cleaning particles to the circulation loop by the feed as they are taken out of the circulation loop by the common drain. In this way the number of cleaning particles are kept constant within the circulation loop. The number of cleaning particles may also be kept at a constant concentration in the liquid in the circulation loop.

It is advantageous to use a selective drain for depletion of any slurry materials retained by the filter out of the circulation loop while keeping the cleaning particles in the circulation loop. In this case the cleaning particles are used for a long time and do not need to be replaced at short intervals.

The selective drain may be a grid with openings being permeable to the slurry materials yet being impermeable to the cleaning particles. For instance the size of the openings of the selective drain may range between 0,02 mm and 0,6 mm, in particular between 0,03 mm and 0,3 mm, preferably between 0,04 mm and 0,2 mm. With such a dimensioning of the sizes of the openings slurry may be depleted from the circulation loop yet cleaning particles may by retained.

In a favourable embodiment of the invention a stabilizer feed is provided for adding stabilizer into the liquid in the circulation loop for binding tanning agents such as poly-phenol complexes, and/or proteins to the stabilizer. With such stabilizers, even unfilterable substances can be filtered as they are bound to macroscopical clusters or gels.

It is advantageous to provide means for back pulsing for supporting the cleaning of the membrane by the cleaning particles with a back pulse of permeate.

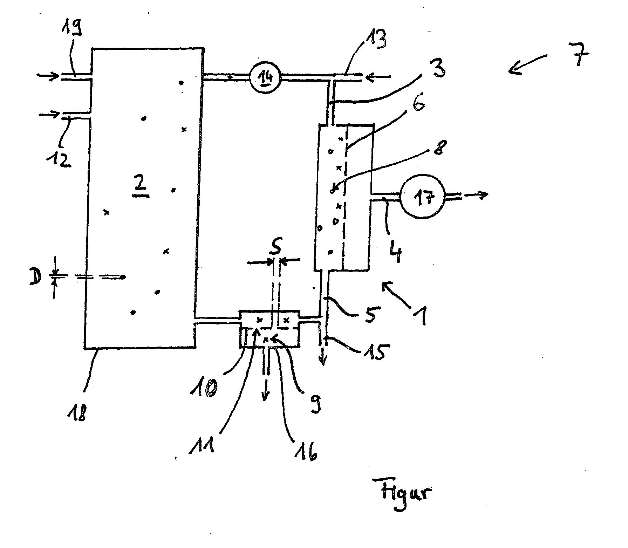

The invention is illustrated in the following with respect to the drawing which demonstrates the invention exemplarily and is not meant to restrict the spirit of the invention.

The figure shows schematically a device for micro filtration in cross section with a liquid 2 to be filtered that is supplied by an inlet 19 to a container 18. The liquid 2 is pumped by a delivering means 14 to a filter 1 for cross flow filtration having an inlet 3 and a circulation outlet 5 and a micro filtration membrane 6 and a permeate outlet 4. The liquid passes along the membrane 6 and exits the filter 1 through the circulation outlet 5. The circulation outlet 5 is connected to a selective drain 16 which comprises a grid 10 having openings 11. The selective drain 16 is in fluid conductive connection with the container 18. By pumping the liquid 2 in a circulation loop 7 that is in this case formed by the container 18, the delivering means 14, the inlet 3, the filter 1, the circulation outlet 5, the selective drain 16, cleaning particles 8, that added by a feed 13 to the circulation loop 7, mechanically clean the membrane 6 of the filter 1. The main particle size D of the cleaning particles 8 is greater than the size S of the openings 11 of the selective drain to keep the cleaning particles within the circulation loop 7. The cleaning particles 8 are also not able to pass the micro filtration membrane 6. Due to the flow of the liquid 2 and the cleaning particles 8, fouling of the membrane 6 is avoided or at least reduced and clogging of the membrane 6 is avoided. The permeate that has passed the membrane 6 is taken from the filter 1 through the permeate outlet 4. To further support the cleaning effect of the cleaning particles 8 of the membrane 6 a means for back pulsing 17, a so called back pulser is provided at the permeate outlet 4. By reversing the permeate flow through the membrane 6, the membrane 6 is further cleaned. A common drain 15 is provided for depletion of both the cleaning particles 8 and any slurry kept in the circulation loop 7. With help of the selective drain 16 slurry can be depleted from the circulation loop 7 while keeping the cleaning particles 8 within the circulation loop 7. For this purpose the size S of the openings 11 of the selective drain 16 are smaller than the mean particle size D of the cleaning particles 8 but bigger than the typical size of the slurry material. For filtering out substances that are too small to be filtered, a stabilizer feed 12 is provided for the circulation loop 7 in order to add stabilizer such as PVPP that binds tanning agents.

The invention concerns a method for micro filtering a liquid 2 with cross flow filtration using a filter 1 having an inlet 3, a permeate outlet 4, a circulation outlet 5 and a micro filtration membrane 6 comprising the following steps: Delivering liquid 2 in a circulation loop 7 from the circulation outlet 5 to the inlet 3; adding cleaning particles 8 into the liquid 2 and circulating the liquid 2 containing the cleaning particles 8 through the filter 1 in the circulation loop 7, thereby causing the cleaning particles 8 to clean the micro filtration membrane 6 mechanically. A corresponding device for micro filtration suitable for using the method according to the invention is given. The invention is distinguished in that micro filtration membranes are cleaned with help of cleaning particles so that cleaning intervals of the system can be extended. Due to the reduction of clogging of the membrane the filtering efficiency is increased considerably.

### Reference numerals

- 1: filter
- 2: liquid
- 3: inlet
- 4: permeate outlet
- 5: circulation outlet
- 6: membrane
- 7: circulation loop
- 8: cleaning particles
- 9: slurry materials
- 10: grid
- 11: openings
- 12: stabilizer feed
- 13: feed
- 14: delivering means
- 15: common drain
- 16: selective drain
- 17: means for back pulsing
- 18: container
- 19: inlet

- S: size of the openings 11
- D: mean particle size of the cleaning particles 8

## Claims

1. Method for micro-filtering a liquid (2) with cross flow filtration using a filter (1) having an inlet (3), a permeate outlet (4), a circulation outlet (5) and a micro-filtration membrane (6), the method comprising:
- delivering the liquid (2) in a circulation loop (7) from the circulation outlet (5) to the inlet (3);
- adding cleaning particles (8) into the liquid (2) and circulating the liquid (2) containing the cleaning particles (8) through the filter (1) in the circulation loop (7), thereby causing the cleaning particles (8) to clean the micro-filtration membrane (6) mechanically.

2. Method for micro-filtering according to claim 1, **characterized in that** the liquid (2) contains biological particles, in particular that the liquid is a fermented liquid or water, preferably beer or wine.

3. Method for micro-filtering according to claim 1 or 2, **characterized in that** the cleaning particles (8) are removed together with any slurry materials (9) retained by the filter (1).

4. Method for micro-filtering according to claim 1 or 2, **characterized in that** any slurry materials (9) retained by the filter (1) are depleted from the circulation loop (7) keeping the cleaning particles (8) in the circulation loop (7).

5. Method for micro-filtering according to claim 4, **characterized in that** the slurry materials (9) are separated from the cleaning particles (8) by a grid (10) with openings (11) being permeable for the slurry materials yet being impermeable for the cleaning particles (8).

6. Method for micro-filtering according to claim 5, **characterized in that** the size (S) of the openings (11) range between 0.02 mm and 0.6 mm, in particular between 0.03 mm and 0.3 mm, preferably between 0.04 mm and 0.2 mm.

7. Method for micro-filtering according to one of the preceding claims 1 to 6 **characterized in that** the cleaning particles (8) have an effective density being equal to the density of the liquid (8).

8. Method for micro-filtering according to one of the preceding claims 1 to 6 **characterized in that** the cleaning particles (8) are made of a material having an effective density of more than 1.4 g/cm³ such as glass, ceramics and/or steel, such as silica-hydro-gel or silica-xero-gel.

9. Method for micro-filtering according to one of the preceding claims, **characterized in that** the mean particle size (D) of the cleaning particles (8) ranges from 0.01 mm to 1 mm, in particular from 0.015 mm to 0.5 mm, preferably from 0.2 mm to 0.2 mm.

10. Method for filtering according to one of the preceding claims, **characterized in that** stabilizer is added into the liquid (2) in the circulation loop (7), thereby binding tanning agents, such as poly-phenol complexes, and/or proteins to the stabilizer.

11. Method for filtering according to one of the preceding claims, **characterized in that** a back pulse of permeate is generated to support the cleaning of the membrane (6) by the cleaning particles (8).

12. Device for micro-filtration of liquid (2) with cross flow filtration comprising a delivering means (14) and a filter (1) having an inlet (3), a permeate outlet (4), a circulation outlet (5) and a micro-filtration membrane (6), wherein the inlet (3) and the circulation outlet (5) are in fluid conductive connection with the delivering means (9) to form a circulation loop (7), **characterized in that**
the circulation loop (7) comprises a feed (13) for adding cleaning particles (8) for mechanically cleaning the membrane (6).

13. Device for micro-filtration according to claim 12, **characterized by** a liquid (2) containing microbiological particles, such as fermented liquid or water, in particular beer or wine.

14. Device for micro-filtration according to claim 12 or 13, **characterized by** a common drain (15) for joint removal of the cleaning particles (8) together with any slurry materials (9) retained by the filter (1).

15. Device for micro filtration according to claim 12 or 13, **characterized by** a selective drain (16) for depletion of any slurry materials (9) retained by the filter (1) out of the circulation loop (7) while keeping the cleaning particles (8) in the circulation loop (7).

16. Device for micro filtration according to claim 15, **characterized in that** the selective drain (16) is a grid (10) with openings (11) being permeable to the slurry materials (9) yet being impermeable to the cleaning particles (8).

17. Device for micro filtration according to one of the preceding claims 12 to 16, **characterized in that** the size (S) of the openings (11) range between 0.02 mm and 0.6 mm, in particular between 0.03 mm and 0.3 mm, preferably between 0.04 mm and 0.2 mm.

18. Device for micro filtration according to one of claims 12 to 17, **characterized by** a stabilizer feed (12) for adding stabilizer into the liquid (2) in the circulation loop (7) for binding tanning agents, such as poly-phenol complexes, and/or proteins to the stabilizer.

19. Device for micro filtration according to one of claims 12 to 18, **characterized by** means for back pulsing for supporting the cleaning of the membrane (6) by the cleaning particles (8) with a back pulse of permeate.
